# EUROPÄISCHE PATENTSCHRIFT

(11) **EP 1 203 647 B1**
(45) Veröffentlichungstag und Bekanntmachung des Hinweises auf die Patenterteilung: **14.01.2004**
(21) Anmeldenummer: 01124300.3
(22) Anmeldetag: 18.10.2001
(51) Int. Cl.: B27N 3/00, C09J 133/00, C09J 125/00

(54) **Verfahren zur Herstellung von Holzpressplatten**
Method for the manufacturing of wooden fibreboards
Procédé pour la fabrication de panneaux en fibres de bois

(30) Priorität: 02.11.2000 DE 10054162
(43) Veröffentlichungstag der Anmeldung: 08.05.2002
(73) Patentinhaber: Wacker Polymer Systems GmbH & Co. KG, 84489 Burghausen (DE)
(72) Erfinder: Wiere, Konrad Alfons, Dr., 84489 Burghausen (DE); Hashemzadeh, Abdulmajid, Dr., 84508 Burgkirchen (DE); Marquardt, Klaus, Dr., 84489 Burghausen (DE)
(74) Vertreter: Schuderer, Michael, Dr.

(56) Entgegenhaltungen:
- EP-A- 0 497 100
- EP-A- 0 672 738
- DE-A- 2 417 243

## Beschreibung

Die Erfindung betrifft ein Verfahren zur Herstellung von Holzpressplatten mittels Verklebung der Holzpartikel mit einem vernetzbaren Bindemittel.

Zur Herstellung von Holzpressplatten werden die Holzpartikel, beispielsweise Holzfasern oder Holzspäne, mit einem organischen Klebemittel unter Druck und bei erhöhter Temperatur verleimt. Das wichtigste Bindemittel für die Spanplattenherstellung sind Harnstoff-Formaldehyd-Harze (UF-Harze). Zur Herstellung von feuchtebeständigen Holzpressplatten haben die Phenol-Formaldehyd-Harze (PF-Harze) grosse Bedeutung. Zur Verbesserung der Feuchtebeständigkeit von Holzpressplatten werden auch Melamin-Formaldehyd-Harze (MF-Harze) oder Gemische aller drei genannten Harztypen eingesetzt. Nachteilig ist bei diesen Klebemitteln, dass sowohl bei der Herstellung der Spanplatten als auch bei Gebrauch der fertig verpressten Spanplatten Formaldehyd emittiert wird. Als formaldehydfreie Bindemittel für Holzpressplatten haben sich organische Isocyanate etabliert. Im allgemeinen verwendet man Diphenylmethan-4,4'-Diisocyanat (MDI). Aber auch der Umgang mit MDI erfordert wegen der sehr reaktiven Isocyanat-Gruppen und der damit verbundenen Reizung von Haut und Atemwegen besondere Vorsichtsmassnahmen bei der Herstellung der Holzpressplatten. Ein weiterer Nachteil dieser Reaktivharze zeigt sich bei der Herstellung von MDF- und HDF-Faserplatten: Hier reagieren diese Harze aufgrund der thermischen Belastung bei der direkten Leimflottenzugabe im Refiner (in der blow-line), was zu einem Verlust von bis zu 25 % des Bindepotentials führt.

Thermoplastische Klebstoffe, beispielsweise auf der Basis von Polyvinylacetat, werden ebenfalls zur Herstellung von Holzpressplatten eingesetzt (US-A 4940741). Problematisch ist hier die Dimensionsstabilität im höheren Temperaturbereich, beispielsweise bei der Entformung, weswegen diese häufig in Kombination mit den genannten Formaldehyd-Kondensationsharzen eingesetzt werden, mit den obengenannten Nachteilen. Ein VOC-armes Klebemittel zur Verleimung von Holzpressplatten ist in der DE-A 19941904 beschrieben. Es handelt sich dabei um ein wässriges Gemisch aus hochviskosem Polyvinylalkohol, carboxylfunktionellem Polyvinylacetat und einem wasserlöslichen Metallsalz einer einbasigen Säure.

Formaldehydfreie, thermisch härtbare, wässrige Bindemittel zur Herstellung von Holzpressplatten sind beispielsweise aus der WO-A 97/31059 bekannt. Darin wird ein Gemisch aus carboxylfunktionellem Copolymer und einem Alkanolamin mit mindestens zwei Hydroxygruppen eingesetzt. Wässrige Klebemittel-Zusammensetzungen aus Polycarbonsäure und Hydroxyalkylgruppen-substituierten Aminoaliphaten sind in der WO-A 97/45461 beschrieben. Die WO-A 99/02591-betrifft Zusammensetzungen aus carboxylfunktionellem Copolymer und langkettigen Aminen. Nachteilig ist bei diesen Systemen, welche über eine Veresterungsreaktion vernetzen, dass die Vernetzung nur im wasserfreien Zustand, bei der Trocknung erfolgt.

Die Druckschrift DE-A 2417243 (D1) beschreibt ein Verfahren zur Herstellung von Holzpressplatten, wobei Holzpartikel mit einem vernetzbaren Bindemittel beleimt und anschließend unter Druck zu Platten verpresst werden (vgl. Seite 1, Zeile 1-7). Das Bindemittel ist ein Copolymer aus Comonomereinheiten aus der Gruppe umfassend Diene und Vinylaromaten und aus mehreren Carboxylgruppen enthaltenden Einheiten (vgl. Anspruch 2). Dem Copolymer können hitzehärtbare Harze beigemengt werden, um höhere Qualitätsanforderungen zu gewahrleisten (vgl. Seite 7, Zeile 4-11).

Der Erfindung lag somit die Aufgabe zugrunde ein Verfahren zur Herstellung von Holzpressplatten zur Verfügung zu stellen, bei dem die Emission von Schadstoffen wie Formaldehyd vermieden wird, aber trotzdem eine hochwertige Verleimung erhalten wird, und ein vorzeitiges Abreagieren von funktionellen Gruppen weitgehend unterbunden wird.

Gegenstand der Erfindung ist ein Verfahren zur Herstellung von Holzpressplatten wobei Holzpartikel, gegebenenfalls nach einem vorgeschaltetem Zerkleinerungsschritt, mit einem vernetzbaren Bindemittel beleimt werden, und anschliessend unter Druck und gegebenenfalls erhöhter Temperatur zu Platten verpresst werden, dadurch gekennzeichnet, dass das thermoplastische Bindemittel zwei Bestandteile A) und B) enthält, wobei
A) ein Copolymer ist, aus einer oder mehreren Comonomereinheiten aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen mit 1 bis 15 C-Atomen, Diene, Olefine, Vinylaromaten und Vinylhalogenide, und aus 0.1 bis 50 Gew.-%, bezogen auf das Gesamtgewicht des Copolymers, einer oder mehrerer Einheiten, welche Carboxyl-, Hydroxy- oder NH-Gruppen enthalten, und
B) mindestens eine Verbindung ist, welche mindestens zwei reaktive Gruppen aufweist, welche mit den unter A) genannten Carboxyl-, Hydroxy- oder NH-Gruppen reagieren können, aus der Gruppe umfassend Epoxy-, N-Methylol-, Isocyanat-, Ethylencarbonat-Gruppen.

Geeignete Vinylester sind Vinylester von unverzweigten oder verzweigten Carbonsäuren mit 1 bis 18 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 5 bis 11 C-Atomen, beispielsweise VeoVa9^{R} oder VeoVa10^{R} (Handelsnamen der Firma Shell). Besonders bevorzugt ist Vinylacetat.

Geeignete Monomere aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat, Norbornylacrylat. Besonders bevorzugt sind Methylacrylat, Methylmethacrylat, n-Butylacrylat, 2-Ethylhexylacrylat und Norbornylacrylat.

Geeignete Diene sind 1,3-Butadien und Isopren. Beispiele für copolymerisierbare Olefine sind Ethen und Propen. Als Vinylaromaten können Styrol und Vinyltoluol copolymerisiert werden. Aus der Gruppe der Vinylhalogenide wird üblicherweise Vinylchlorid eingesetzt.

Geeignete carboxylfunktionelle Comonomere für Copolymer A) sind ethylenisch ungesättigte Mono- und Dicarbonsäuren, vorzugsweise Acrylsäure, Methacrylsäure, Crotonsäure, Itaconsäure, Fumarsäure und Maleinsäure. Die Carboxylfunktion kann auch durch Copolymerisation von Maleinsäureanhydrid in das Copolymer A) eingeführt werden. Geeignete hydroxyfunktionelle Comonomere sind Hydroxyalkylacrylate und HydroxyalkylmethacrylaLe mit C₁- bis C₈-Alkylrest, vorzugsweise Hydroxyethylacrylat und -methacrylat, Hydroxypropylacrylat und -methacrylat, Hydroxybutylacrylat und -methacrylat. Geeignete NH-funktionelle Comonomere sind (Meth)Acrylamid, Diacetonacrylamid, Maleinimid, Malein- und Fumarsäuremonoalkylesteramid, Malein- und Fumarsäurediamid, Glutar- und Bernsteinsäuremonovinylesteramid, Glutar- und Bernsteinsäuremonoallylesteramid. Die NHfunktionellen Einheiten können auch als aminofunktionelle Oligomere mit primären oder sekundären NH-Gruppen, bevorzugt mit primären NH-Gruppen wie Jeffamine, dem Copolymer A) zugegeben werden. Der Anteil an funktionellen Einheiten in Copolymer A) beträgt vorzugsweise 1 bis 30 Gew.-%, besonders bevorzugt 5 bis 20 Gew.-%, jeweils bezogen auf das Gesamtgewicht des Copolymers.

Bevorzugt sind die nachfolgend genannten Polymerzusammensetzungen für das Copolymere A), welches noch die eben genannten, funktionelle Gruppen enthaltenden Einheiten, in den eben beschriebenen Mengen aufweisen:
Vinylacetat-Polymerisate;
Vinylester-Ethylen-Copolymere, wie Vinylacetat-Ethylen-Copolymere; Vinylester-Ethylen-Vinylchlorid-Copolymere, wobei als Vinylester bevorzugt Vinylacetat und/oder Vinylpropionat und/oder ein oder mehrere copolymerisierbare Vinylester wie Vinyllaurat, Vinylpivalat, Vinyl-2-ethylhexansäureester, Vinylester einer alpha-verzweigten Carbonsäure mit 5 bis 11 C-Atomen, insbesondere Versaticsäurevinylester (VeoVa9^{R}, VeoVa10^{R}), enthalten sind;
Vinylacetat-Copolymere mit einem oder mehreren copolymerisierbaren Vinylester wie Vinyllaurat, Vinylpivalat, Vinyl-2-ethylhexansäureester, Vinylester einer alpha-verzweigten Carbonsäure mit 5 bis 11 C-Atomen, insbesonders Versaticsäure-Vinylester (VeoVa9^{R}, Veo-Va10^{R}), welche gegebenenfalls noch Ethylen enthalten;
Vinylester-Acrylsäureester-Copolymerisate insbesondere mit Vinylacetat, und Butylacrylat und/oder 2-Ethylhexylacrylat, welche gegebenenfalls noch Ethylen enthalten;
Vinylester-Acrylsäureester-Copolymerisate mit Vinylacetat und/oder Vinyllaurat und/oder Versaticsäure-Vinylester und Acrylsäureester, insbesondere Butylacrylat oder 2-Ethylhexylacrylat, welche gegebenenfalls noch Ethylen enthalten.

Besonders bevorzugt sind dabei (Meth)acrylsäureester- und Styrol-Polymerisate:
Copolymerisate mit n-Butylacrylat und/oder 2-Ethylhexylacrylat; Copolymerisate von Methylmethacrylat mit Butylacrylat und/oder 2-Ethylhexylacrylat, und/oder 1,3-Butadien;
Styrol-1,3-Butadien-Copolymere und Styrol-(Meth)Acrylsäureester-Copolymere wie Styrol-Butylacrylat, Styrol-Methylmethacrylat-Butylacrylat oder Styrol-2-Ethylhexylacrylat, wobei als Butylacrylat n-, iso- und t-Butylacrylat eingesetzt werden kann.

Am meisten bevorzugt werden Zusammensetzungen mit einem carboxylfunktionellen Styrol-n-Butylacrylat- und/oder einem carboxylfunktionellen Styrol-Methylmethacrylat-n-Butylacrylat-Copolymer als Copolymer A).

Geeignete Vernetzer B) sind nicht-thermoplastische Verbindungen wie Epoxidvernetzer vom Bisphenol-A-Typ, das heisst Kondensationsprodukte von Bisphenol-A und Epichlorhydrin oder Methylepichlorhydrin. Derartige Epoxidvernetzer sind im Handel, beispielsweise unter den Handelsnamen Epicote oder Eurepox, erhältlich. Geeignet sind auch, gegebenenfalls blockierte, Diisocyanate, ebenfalls gängige Handelsprodukte, beispielsweise m-Tetramethylxylen-Diisocyanat (TMXDI), Methylendiphenyl-Diisocyanat (MDI).

Als Vernetzer B) geeignet sind auch Copolymere, welche Epoxy-, N-Methylol-, Ethylencarbonat- oder Isocyanat-Gruppen oder Kombinationen dieser Gruppen enthalten. Die Polymerzusammensetzungen für den Vernetzer B) sind aus den für das Copolymer A) als geeignet beschriebenen Comonomeren aufgebaut. Bevorzugt sind auch hier die für das Copolymere A) genannten bevorzugten Polymerzusammensetzungen, welche statt der Carboxyl-, Hydroxy- oder NH-Gruppen zusätzlich noch Epoxy-, N-Methylol-, Ethylencarbonat- und/oder Isocyanat-Gruppen enthaltende Comonomereinheiten aufweisen. Besonders bevorzugt sind auch hier (Meth)acrylsäureester- und Styrol-Polymerisate, beispielsweise Copolymerisate mit n-Butylacrylat und/oder 2-Ethylhexylacrylat; Copolymerisate von Methylmethacrylat mit Butylacrylat und/oder 2-Ethylhexylacrylat, und/oder 1,3-Butadien; Styrol-1,3-Butadien-Copolymere und Styrol(Meth)Acrylsäureester-Copolymere wie Styrol-Butylacrylat, Styrol-Methylmethacrylat-Butylacrylat oder Styrol-2-Ethylhexylacrylat, wobei als Butylacrylat n-, iso-, t-Butylacrylat eingesetzt werden kann.

Der Gehalt an Epoxy-, N-Methylol-, Ethylencarbonat- und Isocyanatfunktionellen Comonomeren beträgt 0.1 bis 50 Gew.-%, vorzugsweise 1 bis 30 Gew.-%, besonders bevorzugt 5 bis 20 Gew.-%, jeweils bezogen auf das Gesamtgewicht des Copolymers B). Geeignete epoxidfunktionelle Comonomere sind Glycidylacrylat, Glycidylmethacrylat, Allylglycidether, Vinylglycidether, Vinylcyclohexenoxid, Limonenoxid, Myrcenoxid, Caryophyllenoxid, mit einem Glycidylrest im Aromaten substituierte Styrole und Vinyltoluole sowie mit einem Glycidresten im Aromaten substituierte Vinylbenzoate. Geeignete Isocyanat-funktionelle Comonomere sind 2-Methyl-2-isocyanatopropylmethacrylat und Isopropenyl-dimethylbenzylisocyanat (TMI). Geeignete N-Methylol-funktionelle Comonomere sind N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats.

Am meisten bevorzugte Vernetzer B) sind die Epoxidvernetzer vom Bisphenol-A-Typ und epoxidfunktionelle Copolymere, wie Glycidylmethacrylat-Einheiten enthaltende Styrol-(Meth)acrylsäureester-Copolymere.

Die Herstellung von Copolymer A) und gegebenenfalls dem polymeren Vernetzer B) kann mittels bekannter radikalisch initiierter Polymerisationsverfahren erfolgen, beispielsweise mittels Lösungsoder wässriger Emulsionspolymerisation. Zur Trocknung können alle gängigen Trocknungsverfahren angewendet werden: Sprühtrocknung, Walzentrocknung, Gefriertrocknung, Bandtrocknung, Koagulation mit anschließender Wirbelschichttrocknung. Bevorzugt werden Sprühtrokknungs- und Walzentrocknungsverfahren angewendet. Vorzugsweise werden die Comonomere in den oben angegebenen Copolymerisaten in einem solchen Verhältnis copolymerisiert, dass sowohl Copolymer A) als auch Copolymer B) einen Schmelzpunkt oder eine Glasübergangstemperatur Tg von > 30°C, vorzugsweise ≥ 45°C, aufweisen. Die Glasübergangstemperatur Tg und der Schmelzpunkt der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂ /Tg₂ + . .. + xₙ/Tgₙ, wobei xₙ für den Massebruch (Gew.-%/100) des Monomers n steht, und Tgₙ die Glasübergangstemperatur in Grad Kelvin des Homopolymers des Monomer n ist. Tg-Werte für Homopolymerisate sind in Polymer Handbook 2nd Edition, J. Wiley & Sons, New York (1975) aufgeführt.

Die beiden Bestandteile A) und B) liegen in einem solchen Verhältnis vor, dass das molare Verhältnis an funktionellen Comonomereinheiten von Bestandteil A) zu Bestandteil B) von 5 : 1 bis 1 : 5 variiert. Besonders bevorzugt werden äquimolare Verhältnisse der funktionellen Comonomereinheiten. Werden für die Bestandteile A) und B) jeweils entsprechend funktionalisierte Copolymere eingesetzt, so werden diese so ausgewählt, dass sie miteinander verträglich sind, das heisst auf molekularer Ebene miteinander mischbar sind. Üblicherweise geht man daher so vor, dass die in der Kombination vorliegenden Copolymere A) und B), abgesehen von den funktionellen Comonomereinheiten, grösstenteils aus denselben Comonomereinheiten aufgebaut sind. Am meisten bevorzugt werden daher Zusammensetzungen mit carboxylfunktionellem Styrol-n-Butylacrylat- und/oder Styrol-Methylmethacrylat-n-Butylacrylat-Copolymer als Bestandteil A) und mit glycidylmethacrylathaltigem Styrol-n-Butylacrylat- und/oder Styrol-Methylmethacrylat-n-Butylacrylat-Copolymer als Bestandteil B).

Die Anwendung der Bestandteile A) und B) kann in trockener, pulverförmiger Form (Trockenbeleimung), in Form einer wässrigen Dispersion oder einer wässrigen Lösung (Nassbeleimung) erfolgen. Die Bestandteile A) und B) können dabei beide als Pulver oder beide als wässrige Lösung oder wässrige Dispersion eingesetzt werden. Es können auch Pulver, wässrige Lösungen oder wässrige Dispersionen eingesetzt werden, welche jeweils beide Bestandteile A) und B) im Gemisch enthalten. Schliesslich können auch Pulver, Lösungen und Dispersionen, welche jeweils einen Bestandteil enthalten, in beliebiger Kombination eingesetzt werden. Je nach Verfahrensvariante können die Bindemittelbestandteile A) und B) getrennt oder im Gemisch eingesetzt werden. Beim Einsatz von pulverförmigem Bindemittel können gegebenenfalls die Fasern mit Wasser oder einer Olefinwachsemulsion befeuchtet werden. Dazu werden 2 bis 10 Gew.-% Wasser (Olefinwachsemulsion), bezogen auf Bindemittel, auf die Fasern oder Späne aufgesprüht.

Die Herstellung von Holzpressplatten ist in Deppe, Ernst, Taschenbuch der Spanplattentechnik, 3. Auflage 1991 detailliert beschrieben. Zur Herstellung der Holzpressplatten werden die Holzpartikel als Späne oder Fasern eingesetzt. Die, wahlweise vorgetrockneten, Fasern oder Späne werden in den üblichen Mischbehältern, wie Pflugscharmischer, mit Bindemittel vermischt. Im allgemeinen wird die Bindemittelzusammensetzung in einer Menge von 5 bis 30 Gew.-%, bevorzugt in einer Menge von 7 bis 15 Gew.-%, jeweils bezogen auf Holz (fest/fest), eingesetzt. Die beleimten Fasern oder Späne werden gleichmässig auf ein Formband aufgestreut und gegebenenfalls kalt vorgepresst. Anschliessend wird die Faserschicht mittels Heizplatten bei Temperaturen von 150°C bis 250°C und unter einem Druck von 10 bis 100 bar zu Platten verpresst.

Zur Herstellung von OSB-Platten (Oriented Strand Board) werden Langspäne (Strands) mit einem Längen-Breiten-Verhältnis von im allgemeinen 5 : 1 bis 10 : 1 eingesetzt, welche wie oben beschrieben nass oder trocken beleimt werden, und dann orientiert und schichtweise abgelegt, und unter den genannten Bedingungen heiss verpresst werden.

Bei der Herstellung von MDF-Platten (Medium Density Fibreboard) und HDF-Platten (High Density Fibreboard) werden die Fasern in einer Refineranlage hydrothermisch vorbehandelt, das heisst unter Hitze und Dampfdruck gekocht und gemahlen, anschliessend in einem Entspannungsrohr im Dampfstrom aufgewirbelt, danach in einem Trockenrohr getrocknet, gegebenenfalls in einer Kaltpresse vorverdichtet, und schliesslich unter Druck, vorzugsweise 10 bis 100 bar, und gegebenenfalls erhöhter Temperatur, vorzugsweise 150°C bis 250°C, zu Platten verpresst. Zur Beleimung werden die Fasern oder Späne nach der Mahlung, noch unter Dampfdruck und bei Temperaturen von 120°C bis 150°C, mittels Zugabe einer wässrigen Dispersion oder wässrigen Lösung der Bindemittelzusammensetzung in das Entspannungsrohr (blow-line) oder in das Trockenrohr besprüht, oder beim Einsatz von pulverförmigen Bindemittelzusammensetzungen mit dem Bindemittel vermischt. Anschliessend werden die beleimten Fasern getrocknet. Alternativ können die Holzfasern auch ohne Beleimung getrocknet und im trockenen Zustand in einem geeigneten Mischer mit dem Bindemittel gemischt werden.

Besonders bevorzugt ist ein Verfahren bei dem die Bindemittelbestandteile A) und B) als zwei Komponenten (2K-System) getrennt zur Herstellung von MDF- und HDF-Platten eingesetzt werden. Dazu kann eine Komponente des Bindemittels während des Mahlschrittes in die Mühle der Refineranlage gegeben werden. Am meisten bevorzugt ist eine Vorgehensweise bei der ein Bestandteil des Bindemittels, insbesondere Bestandteil A), in die Refineranlage, vor der Mühle, oder in der Mühle, oder kurz nach der Mühle in dem Entspannungsrohr (blow-line), vorzugsweise in dessen erstem Drittel, zugegeben wird. Der zweite Bestandteil, die Vernetzerkomponente B), wird in einer späteren Stufe des Verfahrens eingebracht. Dies kann am Ende der Entspannungsstrecke der Refineranlage, vorzugsweise in dessen letztem Drittel, während dem Trocknen der Fasern im Trocknungsrohr, oder nach dem Trocknen der Fasern erfolgen. Der Vorteil dieser Verfahrensvariante besteht darin, dass die Vernetzerkomponente B) in einem Verfahrensschritt zugegeben wird, bei dem die thermische Belastung niedriger ist, und somit eine weit geringere Vorvernetzung auftritt.

### Beispiele:

### Vergleichsbeispiel 1:

Fichtenholzspäne wurden in einem Refiner bei 5 bar und 147°C für 5 Minuten gekocht und mit einem Mahlscheibenabstand von 0.1 mm, und bei einer Leistungsaufnahme von 20 kW aufgemahlen. Die Fasern wurden ohne Beleimung auf 2 % Restfeuchte getrocknet und ohne Verdichtung zwischengelagert.

In einem Lödige-Pflugscharmischer mit Mehrstufenmesserkopf wurden 755 g der gemahlenen Fasern gleichmässig mit 112 g (= 15 Gew.-%) pulverigem Phenol-Formaldehyd-Harz ( PF) vermischt. Zur besseren Haftung der Pulver setzte man 5 Gew.-% Wasser im Lödigemischer zu. Die beleimten Fasern wurden in einen 50 x 50 cm² grossen, 40 cm hohen Rahmen gleichmässig per Hand ausgestreut und bei Raumtemperatur verdichtet. Diese Matte wurde aus dem Rahmen genommen und in eine Flachpresse gelegt und für 180 sec bei 200°C mit bis zu 50 bar Druck auf 3 mm Solldichte verpreßt. Die heisse Platte wurde zur Vervollständigung der Vernetzungsreaktion in eine Isolierbox gelegt und 12 Stunden warmgehalten, anschliessend zurechtgeschnitten und den Eigenschaftsprüfungen unterworfen.

### Beispiel 2:

Es wurde analog Vergleichsbeispiel 1 vorgegangen, mit dem Unterschied, dass als Bindemittel 15 Gew.-% (fest/fest) einer Pulvermischung aus einem Styrol-Butylacrylat-Acrylsäure-Copolymer mit einer Tg > 50°C und einem Styrol-Butylacrylat-Glycidylmethacrylat-Copolymer mit einer Tg > 50°C eingesetzt wurde, und keine 12-stündige Lagerung der Platten vor der Testung erfolgte.

### Beispiel 3:

Die Fichtenholzspäne wurden analog Vergleichsbeispiel 1 in einem Refiner bei 5 bar und 147°C für 5 Minuten gekocht und mit einem Mahlscheibenabstand von 0.1 mm bei einer Leistungsaufnahme von 20 kW aufgemahlen. Kurz nach der Mühle wurde ein Gemisch von wässrigen Dispersionen eines Styrol-Butylacrylat-Acrylsäure-Copolymers mit einer Tg > 50°C und eines Styrol-Butylacrylat-Glycidylmethacrylat-Copolymers mit einer Tg > 50°C, mit jeweils 50 % Festgehalt, in einer Menge von 15 Gew.-% (fest/fest) im ersten Drittel des Entspannungsrohres, zugegeben. Die beleimten Fasern wurden anschliessend auf 2 % Restfeuchte getrocknet und ohne Verdichtung zwischengelagert.
Die beleimten Fasern wurden in einen 50 x 50 cm² grossen, 40 cm hohen Rahmen gleichmässig per Hand ausgestreut und bei Raumtemperatur verdichtet. Diese Matte wurde aus dem Rahmen genommen und in eine Flachpresse gelegt und für 180 sec bei 200°C mit bis zu 50 bar Druck auf 3 mm Solldichte verpresst. Die Platte wurden anschliessend zurechtgeschnitten und den Eigenschaftsprüfungen unterworfen.

### Beispiel 4:

Die Fichtenholzspäne wurden analog Vergleichsbeispiel 1 in einem Refiner bei 5 bar und 147°C für 5 Minuten gekocht und mit einem Mahlscheibenabstand von 0.1 mm bei einer Leistungsaufnahme von 20 kW aufgemahlen. Kurz nach der Mühle, im ersten Drittel des Entspannungsrohres, wurde eine wässrige Dispersion eines Styrol-Butylacrylat-Acrylsäure-Copolymers mit einer Tg > 50°C in einer Menge von 9 Gew.-% (fest/fest) zugegeben. Die beleimten Fasern wurden anschliessend auf 2 % Restfeuchte getrocknet; und die getrockneten Fasern mit 6 Gew.-% pulverförmigem Styrol-Butylacrylat-Glycidylmethacrylat-Copolymer mit einer Tg > 50°C in einem Lödige-Pflugscharmischer mit Mehrstufenmesserkopf vermischt. Die beleimten Fasern wurden in einen 50 x 50 cm² grossen, 40 cm hohen Rahmen gleichmässig per Hand ausgestreut und bei Raumtemperatur verdichtet. Diese Matte wurde aus dem Rahmen genommen und in eine Flachpresse gelegt und für 180 sec bei 200°C mit bis zu 50 bar Druck auf 3 mm Solldichte verpresst. Die Platte wurden anschliessend zurechtgeschnitten und den Eigenschaftsprüfungen unterworfen.

### Beispiel 5:

1500 g Industrie-OSB-Späne aus Fichtenholz mit 2 Gew.-% Restfeuchte wurden mit 2 Gew.-% Wachsemulsion und mit 150 g Wasser, sowie mit 294 g (= 20 Gew.-%) einer Pulvermischung aus einem Styrol-Butylacrylat-Acrylsäure-Copolymer mit einer Tg > 50°C und einem Styrol-Butylacrylat-Glycidylmethacrylat-Copolymer mit einer Tg > 50°C in einer Trommel gemischt. Die Späne wurden auf eine Plattengrösse von 50 x 50 cm² orientiert gelegt, und bei 200°C für 8 Minuten auf 10 mm Dicke gepresst. Die Platte wurden anschliessend zurechtgeschnitten und den Eigenschaftsprüfungen unterworfen.

### Anwendungstechnische Prüfungen:

Von den hergestellten Pressplatten wurden die Querzugfestigkeit nach EN 319, die Biegefestigkeit nach DIN 52 362 und die Dickenquellung nach 2 h und 24 h nach DIN 52 364 geprüft.
Die Messergebnisse sind in der Tabelle zusammengefasst.

Vergleichsbeispiel 1 zeigt hohe Querzug- und Biegefestigkeit, sowie geringe Wasserquellung. Da das Phenolharz nicht im Refiner, sondern bei Raumtemperatur auf trockenen Fasern zugegeben wurde, stand bei der Pressung die volle Vernetzungskapazität zur Verfügung.
Nachteilig ist die nachträgliche lange Thermobehandlung um die Vernetzungsreaktion vollständig ablaufen zu lassen. Nachteilig ist auch die hohe Splittergefahr der Pressplatten, bedingt durch den hohen Vernetzungsgrad und die niedrige Flexibilität des Harzes. Dies ist gerade in Anwendungen für den Automobilbereich wegen der Verletzungsgefahr bei Unfällen unerwünscht.
Die Platte war gelb-braun gefärbt und wies einen deutlichen unangenehmen Geruch auf.

Beispiel 2 führt zu ähnlichen Festigkeiten und Quellwerten wie das Vergleichsbeispiel 1. Besonders auffällig ist bei den Biegetests die Durchbiegung von über 29 mm ohne einen Plattenbruch zu bekommen. Da das Bindemittel nach der Fasertrocknung zugegeben wurde steht die volle Vernetzungskapazität zur Verfügung.

Beispiel 3 wurde über die Nassbeleimung mit demselben Harz gebunden wie Beispiel 2 über Trockenbeleimung. In der Nassbeleimung wurde das Harz durch die stärkeren Turbulenzen und die lange Mischungsstrecke generell gleichmässiger an der Faseroberfläche verteilt. Man erwartete dadurch eine stärkere Bindung der Fasern in der Pressplatte. Der Vergleich der Werte zeigt aber, dass die Nassbeleimung leicht schwächer als die Trockenbeleimung ist. Ursache des Bindeverlustes ist, dass schon im Refiner die Vernetzung teilweise abläuft. Beim Verpressen floss das Harz schlechter und konnte nicht mehr so gut abbinden.

Beispiel 4 (2-Komponenten-Verfahren) zeigte die besten Festigkeiten. Hier wurde in der Nassbeleimung nur eine Bestandteil mit thermisch stabilen, funktionellen Gruppen eingebracht und eine optimale Bindemittelverteilung erreicht. Der zweite Bestandteil mit vernetzbaren, thermisch instabilen Gruppen wurde bei kurzzeitiger und geringer thermischer Belastung mittels Trockenbeleimung zugegeben. Damit stand bei der Pressung die volle Vernetzungskapazität zur Verfügung.

Beispiel 5 führte zu einer Platte mit für eine OSB-Platte guten Festigkeiten und geringer Wasserquellung.

Die Beispiele 2 bis 5 wiesen im Gegensatz zu den mit Phenol-Formaldehyd-Harz gebundenen Platten (Vergleichsbeispiel 1) keine Verfärbung durch das Harz auf.
Die Beispiele 2 bis 5 wiesen keine Emissionen von Formaldehyd auf, da die verwendeten Vernetzungssysteme frei von Formaldehyd und dessen Derivaten waren.

**Tabelle:**

| Beispiel | Querzugfestigkeit N/mm² | Biegefestigkeit N/mm² | Biege-E-Modul | Quellung 2 h | Quellung 24 h |
|---|---|---|---|---|---|
| V.Bsp. 1 | 1.37 | 60.3 | 6226 | 4 | 12 |
| Bsp. 2 | 1.01 | 48.0 | 5021 | 6 | 16 |
| Bsp. 3 | 0.95 | 43.6 | 4772 | 13 | 29 |
| Bsp. 4 | 1.93 | 56.4 | 5177 | 8 | 21 |
| Bsp. 5 | 0.15 | 15.3 | -- | 9 | 35 |

## Patentansprüche

1. Verfahren zur Herstellung von Holzpressplatten wobei Holzpartikel, gegebenenfalls nach einem vorgeschalteter Zerkleinerungsschritt, mit einem vernetzbaren Bindemittel beleimt werden, und anschliessend unter Druck und gegebenenfalls erhöhter Temperatur zu Platten verpresst werden, wobei das thermoplastische Bindemittel zwei Bestandteile A) und B) enthält, wobei
A) ein Copolymer ist, aus einer oder mehreren Comonomereihheiten aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen mit 1 bis 15 C-Atomen, Diene, Olefine, Vinylaromaten und Vinylhalogenide, und aus 0.1 bis 50 Gew.-%, bezogen auf das Gesamtgewicht des Copolymers, einer oder mehrerer Einheiten, welche Carboxyl-, Hydroxy- oder NH-Gruppen enthalten, und
B) mindestens eine Verbindung ist, welche mindestens zwei reaktive Gruppen aufweist, welche mit den unter A) genannten Carboxyl-, Hydroxy- oder NH-Gruppen reagieren können, aus der Gruppe umfassend Epoxy-, N-Methylol-, Isocyanat-, Ethylencarbonat-Gruppen.

2. Verfahren nach Anspruch 1, **dadurch gekennzeichnet, dass** in Bestandteil A) als carboxylfunktionelle Comonomereinheiten solche enthalten sind, welche durch Copolymerisation mit ethylenisch ungesättigten Mono- oder Dicarbonsäuren oder durch Copolymerisation von Maleinsäureanhydrid erhalten werden.

3. Verfahren nach Anspruch 1 oder 2, **dadurch gekennzeichnet, dass** als Bestandteil A) carboxylfunktionelle Styrol-n-Butylacrylat- und/oder Styrol-Methylmethacrylat-n-Butylacrylat-Copolymere enthalten sind.

4. Verfahren nach Anspruch 1 bis 3, **dadurch gekennzeichnet, dass** als Bestandteil B) Epoxidvernetzer vom Bisphenol-A-Typ oder Diisocyanate enthalten sind.

5. Verfahren nach Anspruch 1 bis 3, **dadurch gekennzeichnet, dass** als Bestandteil B) Copolymere von einer oder mehreren Comonomereinheiten aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen mit 1 bis 15 C-Atomen, Diene, Olefine, Vinylaromaten und Vinylhalogenide, welche zusätzlich noch Epoxy-, N-Methylol-, Ethylencarbonat- oder Isocyanat-Gruppen enthaltende Comonomereinheiten aufweisen, enthalten sind.

6. Verfahren nach Anspruch 5, **dadurch gekennzeichnet, dass** als Bestandteil B) (Meth)acrylsäureester- und Styrol-Polymerisate, Copolymerisate von Methylmethacrylat mit Butylacrylat und/oder 2-Ethylhexylacrylat, und/oder 1,3-Butadien; Styrol-1,3-Butadien-Copolymere und Styrol-(Meth)Acrylsäureester-Copolymere, welche jeweils zusätzlich noch Epoxy-, N-Methylol-, Ethylencarbonat- oder Isocyanat-Gruppen enthaltende Comonomereinheiten aufweisen, enthalten sind.

7. Verfahren nach Anspruch 5, **dadurch gekennzeichnet, dass** Zusammensetzungen mit carboxylfunktionellen Styrol-n-Butylacrylatund/oder Styrol-Methylmethacrylat-n-Butylacrylat-Copolymer als Bestandteil A) und mit glycidylmethacrylathaltigem Styrol-n-Butylacrylat- und/oder Styrol-Methylmethacrylat-n-Butylacrylat-Copolymer als Bestandteil B) eingesetzt werden.

8. Verfahren nach Anspruch 1 bis 7, **dadurch gekennzeichnet, dass** die beiden Bestandteile A) und B) in einem solchen Verhältnis vorliegen, dass das molare Verhältnis an funktionellen Comonomereinheiten von Bestandteil A) zu Bestandteil B) von 5 : 1 bis 1 : 5 variiert.

9. Verfahren nach Anspruch 1 bis 8, **dadurch gekennzeichnet, dass** die Bestandteile A) und B) beide als Pulver oder beide als wässrige Lösung oder wässrige Dispersion eingesetzt werden, oder als Pulver, wässrige Lösungen oder wässrige Dispersionen eingesetzt werden, welche jeweils beide Bestandteile A) und B) im Gemisch enthalten, oder als beliebige Kombination von Pulver, Lösung und Dispersion eingesetzt werden, welche jeweils einen Bestandteil enthalten.

10. Verfahren nach Anspruch 1 bis 9, **dadurch gekennzeichnet, dass** die Holzpartikel als Späne oder Fasern eingesetzt werden, mit Bindemittel in einer Menge von 5 bis 30 Gew.-%,-bezogen auf Holz (fest/fest), vermischt werden, auf ein Formband aufgestreut, und anschliessend bei Temperaturen von 150°C bis 250°C und unter einem Druck von 10 bis 100 bar zu Platten verpresst werden.

11. Verfahren nach Anspruch 10, **dadurch gekennzeichnet, dass** die Holzpartikel als Langspäne mit einem Längen-Breiten-Verhältnis von 5 : 1 bis 10 : 1 eingesetzt werden, welche orientiert und schichtweise abgelegt, und verpresst werden.

12. Verfahren nach Anspruch 1 bis 9, **dadurch gekennzeichnet, dass** die Holzpartikel als Fasern eingesetzt werden, wobei die Fasern in einer Refineranlage hydrothermisch vorbehandelt werden, noch unter Dampfdruck und bei Temperaturen von 120°C bis 150°C zur Beleimung mit einer wässrigen Dispersion oder wässrigen Lösung der Bindemittelzusammensetzung im Entspannungsrohr oder im Trockenrohr der Refineranlage besprüht, oder beim Einsatz von pulverförmigen Bindemittelzusammensetzungen mit dem Bindemittel vermischt werden, und nach Trocknung die Faserschicht bei Temperaturen von 150°C bis 250°C und unter einem Druck von 10 bis 100 bar zu Platten verpresst wird.

13. Verfahren nach Anspruch 12, **dadurch gekennzeichnet, dass** die Holzpartikel ohne Beleimung getrocknet werden und im trockenen Zustand in einem geeigneten Mischer mit dem Bindemittel gemischt werden.

14. Verfahren nach Anspruch 12, **dadurch gekennzeichnet, dass** ein Bestandteil des Bindemittels in der Refineranlage zugegeben wird und der zweite Bestandteil in einer späteren Stufe des Verfahrens zugegeben wird.

15. Verfahren nach Anspruch 12, **dadurch gekennzeichnet, dass** Bestandteil A) in die Refineranlage, vor der Mühle, oder in der Mühle, oder kurz nach der Mühle im ersten Drittel des Entspannungsrohres, zugegeben wird und der Vernetzerbestandteil B) im letzten Drittel des Entspannungsrohres der Refineranlage, während dem Trocknen der Fasern im Trocknungsrohr, oder nach dem Trocknen der Fasern zugegeben wird.

## Claims

1. Process for producing wood particleboards, in which wood particles, if appropriate after a preceding comminution step, are treated with a crosslinkable binder and are subsequently pressed together under pressure and, if desired, elevated temperature to produce boards, wherein the thermoplastic binder comprises two constituents A) and B), where
A) is a copolymer comprising one or more comonomer units selected from the group consisting of vinyl esters of unbranched or branched alkylcarboxylic acids having from 1 to 18 carbon atoms, acrylic esters or methacrylic esters of branched or unbranched alcohols having from 1 to 15 carbon atoms, dienes, olefins, vinylaromatics and vinyl halides, and from 0.1 to 50% by weight, based on the total weight of the copolymer, of one or more units comprising carboxyl, hydroxy or NH groups, and
B) is at least one compound having at least two reactive groups which can react with the carboxyl, hydroxy or NH groups specified under A) and are selected from the group comprising epoxy, N-methylol, isocyanate and ethylene carbonate groups.

2. Process according to Claim 1, **characterized in that** constituent A) comprises carboxyl-functional comonomer units obtained by copolymerization with ethylenically unsaturated monocarboxylic or dicarboxylic acids or by -copolymerization of maleic anhydride.

3. Process according to Claim 1 or 2, **characterized in that** carboxyl-functional styrene-n-butyl acrylate and/or styrene-methyl methacrylate-n-butyl acrylate copolymers are present as constituent A).

4. Process according to any of Claims 1 to 3, **characterized in that** the epoxide crosslinkers of the bisphenol A type or diisocyanates are present as constituent B).

5. Process according to any of Claims 1 to 3, **characterized in that** copolymers of one or more comonomer units selected from the group consisting of vinyl esters of unbranched or branched alkylcarboxylic acids having from 1 to 18 carbon atoms, acrylic esters or methacrylic esters of branched or unbranched alcohols having from 1 to 15 carbon atoms, dienes, olefins, vinylaromatics and vinyl halides, which may further comprise comonomer units comprising epoxy, N-methylol, ethylene carbonate or isocyanate groups, are present as constituent B).

6. Process according to Claim 5, **characterized in that** (meth)acrylic ester polymers and styrene polymers, copolymers of methyl methacrylate with butyl acrylate and/or 2-ethylhexyl acrylate and/or 1,3-butadiene; styrene-1,3-butadiene copolymers and styrene-(meth)acrylic ester copolymers, which may each further comprise comonomer units comprising epoxy, N-methylol, ethylene carbonate or isocyanate groups, are present as constituent B) .

7. Process according to Claim 5, **characterized in that** compositions comprising carboxyl-functional styrene-n-butyl acrylate and/or styrene-methyl methacrylate-n-butyl acrylate copolymers as constituent A) and a styrene-n-butyl acrylate and/or styrene-methyl methacrylate-n-butyl acrylate copolymer comprising glycidyl methacrylate as constituent B) are used.

8. Process according to any of Claims 1 to 7, **characterized in that** the two constituents A) and B) are present in such a ratio that the molar ratio of functional comonomer units of constituent A) to those of constituent B) is in the range from 5:1 to 1:5.

9. Process according to any of Claims 1 to 8, **characterized in that** the constituents A) and B) are both used as powder or both used as aqueous solution or aqueous dispersion, or are used as powders, aqueous solutions or aqueous dispersions which each comprise both constituents A) and B) in admixture, or are used as any combination of powders, solutions and dispersions which each comprise one constituent.

10. Process according to any of Claims 1 to 9, **characterized in that** the wood particles are used as chips or fibres, are mixed with a binder in an amount of from 5 to 30% by weight, based on wood (solid/solid), sprinkled onto a moulding belt and subsequently pressed at temperatures of from 150°C to 250°C under a pressure of from 10 to 100 bar to produce boards.

11. Process according to Claim 10, **characterized in that** the wood particles are used as strands having a length/width ratio of from 5:1 to 10:1 which are then oriented and laid down in layers and pressed.

12. Process according to any of Claims 1 to 9, **characterized in that** the wood particles are used as fibres and the fibres are pretreated hydrothermally in a refiner unit, treated with binder while still under steam pressure and at temperatures of from 120°C to 150°C by spraying with an aqueous dispersion or aqueous solution of the binder composition in the blow-line or in the drying tube of the refiner unit or, when using pulverulent binder compositions, are mixed with the binder, and, after drying, the fibre layer is pressed at temperatures of from 150°C to 250°C under a pressure of from 10 to 100 bar to produce boards.

13. Process according to Claim 12, **characterized in that** the wood particles are dried without treatment with binder and are mixed in the dry state with the binder in a suitable mixer.

14. Process according to Claim 12, **characterized in that** one constituent of the binder is added in the refiner unit and the second constituent is added in a later stage of the process.

15. Process according to Claim 12, **characterized in that** constituent A) is added in the refiner unit before the mill or in the mill or shortly after the mill in the first third of the blow-line and the crosslinker constituent B) is added in the last third of the blow-line of the refiner unit, during drying of the fibres in the drying tube or after drying of the fibres.

## Revendications

1. Procédé pour la fabrication de panneaux en bois aggloméré, dans lequel des particules de bois, le cas échéant après une étape de broyage préalable, sont encollées avec un liant réticulable et ensuite comprimées en panneaux sous pression et le cas échéant en augmentant la température, le liant thermoplastique contenant deux constituants A) et B),
A) étant un copolymère d'une ou de plusieurs unités comonomères du groupe comprenant les esters vinyliques d'acides alkylcarboxyliques linéaires ou ramifiés comprenant 1 à 18 atomes de carbone, les esters de l'acide acrylique ou méthacrylique d'alcools linéaires ou ramifiés comprenant 1 à 15 atomes de carbone, les diènes, les oléfines, les aromatiques de vinyle et les halogénures de vinyle et de 0,1 à 50% en poids, par rapport au poids total du copolymère, d'une ou de plusieurs unités contenant des groupements carboxyle, hydroxy ou NH et
B) étant au moins un composé qui présente au moins deux groupements réactifs qui peuvent réagir avec les groupements carboxyle, hydroxy ou NH mentionnés au point A), du groupe comprenant les groupements époxy, N-méthylol, isocyanate, éthylènecarbonate.

2. Procédé selon la revendication 1, **caractérisé en ce que** les unités comonomères à fonctionnalité carboxyle qui sont contenues dans le constituant A) sont celles qui sont obtenues par copolymérisation avec des acides monocarboxyliques ou dicarboxyliques éthyléniquement insaturés ou par copolymérisation d'anhydride de l'acide maléique.

3. Procédé selon la revendication 1 ou 2, **caractérisé en ce que** des copolymères de styrène-acrylate de n-butyle et/ou de styrène-méthacrylate de méthyle-acrylate de n-butyle à fonctionnalité carboxyle sont contenus en tant que constituant A).

4. Procédé selon les revendications 1 à 3, **caractérisé en ce que** des réticulants d'époxydes du type bisphénol-A ou des diisocyanates sont contenus en tant que constituant B).

5. Procédé selon les revendications 1 à 3, **caractérisé en ce que** sont contenus, en tant que constituant B), des copolymères d'une ou de plusieurs unités comonomères du groupe comprenant les esters vinyliques d'acides alkylcarboxyliques linéaires ou ramifiés comprenant 1 à 18 atomes de carbone, les esters de l'acide acrylique ou méthacrylique d'alcools linéaires ou ramifiés comprenant 1 à 15 atomes de carbone, les diènes, les oléfines, les aromatiques de vinyle et les halogénures de vinyle, qui contiennent en outre encore des unités comonomères contenant des groupes époxy, N-méthylol, éthylènecarbonate ou isocyanate.

6. Procédé selon la revendication 5, **caractérisé en ce que** sont contenus, en tant que constituant B), des polymères de l'acide (méth)acrylique et de styrène, des copolymères de méthacrylate de méthyle avec de l'acrylate de butyle et/ou de l'acrylate de 2-éthylhexyle et/ou du 1,3-butadiène, des copolymères de styrène et de 1,3-butadiène et des copolymères de styrène et de l'ester de l'acide (méth)acrylique, qui contiennent en outre encore des unités comonomères contenant des groupes époxy, N-méthylol, éthylènecarbonate ou isocyanate.

7. Procédé selon la revendication 5, **caractérisé en ce qu'**on utilise comme constituant A) des compositions avec un copolymère de styrène-acrylate de n-butyle et/ou de styrène-méthacrylate de méthyle-acrylate de n-butyle à fonctionnalité carboxyle et comme constituant B) un copolymère de styrène-acrylate de n-butyle et/ou de styrène-méthacrylate de méthyle-acrylate de n-butyle contenant du méthacrylate de glycidyle.

8. Procédé selon les revendications 1 à 7, **caractérisé en ce que** les deux constituants A) et B) se trouvent dans un rapport tel que le rapport molaire des unités comonomères fonctionnelles du constituant A) au constituant B) varie de 5:1 à 1:5.

9. Procédé selon les revendications 1 à 8, **caractérisé en ce que** les constituants A) et B) sont tous les deux utilisés sous forme de poudre ou tous les deux sous forme de solution aqueuse ou de dispersion aqueuse ou sous forme de poudres, de solutions aqueuses ou de dispersions aqueuses qui contiennent à chaque fois les deux constituants A) et B) en mélange, ou sous forme d'une combinaison quelconque de poudre, solution et dispersion, qui contient à chaque fois un constituant.

10. Procédé selon les revendications 1 à 9, **caractérisé en ce que** les particules de bois sont utilisées sous forme de copeaux ou de fibres, mélangées avec le liant en une quantité de 5 à 30% en poids par rapport au bois (solide/solide), répandues sur une bande de moulage et ensuite comprimées en panneaux à des températures de 150°C à 250°C et sous une pression de 10 à 100 bars.

11. Procédé selon la revendication 10, **caractérisé en ce que** les particules de bois sont utilisées sous forme de copeaux longs avec un rapport longueur-largeur de 5:1 à 10:1, qui sont orientés, placés en couches et comprimés.

12. Procédé selon les revendications 1 à 9,
**caractérisé en ce que** les particules de bois sont utilisées sous forme de fibres, les fibres étant prétraitées par voie hydrothermique dans une installation de raffinage, aspergées en étant encore à la pression de vapeur et à des températures de 120°C à 150°C pour l'encollage avec une dispersion aqueuse ou une solution aqueuse de la composition de liant dans un tuyau de détente ou un tuyau de séchage de l'installation de raffinage ou, dans le cas de l'utilisation de compositions de liant sous forme de poudre, mélangées avec le liant et la couche de fibres, après séchage, est comprimée en panneaux à des températures de 150°C à 250°C et sous une pression de 10 à 100 bars.

13. Procédé selon la revendication 12, **caractérisé en ce que** les particules de bois sont séchées sans encollage et mélangées avec le liant à l'état sec dans un mélangeur approprié.

14. Procédé selon la revendication 12, **caractérisé en ce qu'**un constituant du liant est ajouté dans l'installation de raffinage et le deuxième constituant dans une étape ultérieure du procédé.

15. Procédé selon la revendication 12, **caractérisé en ce que** le constituant A) est ajouté dans l'installation de raffinage, en amont du broyeur ou dans le broyeur ou juste en aval du broyeur, dans le premier tiers du tuyau de détente et le constituant réticulant B) est ajouté dans le dernier tiers du tuyau de détente de l'installation de raffinage, pendant le séchage des fibres dans le tuyau de séchage ou après le séchage des fibres.
